**Europäisches Patentamt**

**European Patent Office**

**Office européen des brevets**

(19)

(11) Veröffentlichungsnummer: **0 123 995**
**A1**

(12) **EUROPÄISCHE PATENTANMELDUNG**

(21) Anmeldenummer: **84104236.9**

(22) Anmeldetag: **14.04.84**

(51) Int. Cl.³: **F 24 H 1/28, F 24 H 3/06**

(30) Priorität: **27.04.83 DE 3315258**
**29.08.83 DE 3331054**
**17.09.83 DE 3333730**
**21.01.84 DE 3402086**

(43) Veröffentlichungstag der Anmeldung: **07.11.84**
**Patentblatt 84/45**

(84) Benannte Vertragsstaaten: **AT BE CH DE FR GB IT LI NL SE**

(71) Anmelder: **Etablissement Agura, FL-9490 Vaduz (LI)**

(72) Erfinder: **Kehrel, Herbert, Schwefelstrasse 25, FL-9490 Vaduz (LI)**

(74) Vertreter: **Patentanwälte Schulze Horn und Hoffmeister, Goldstrasse 36, D-4400 Münster (DE)**

(54) **Kondensatheizkessel mit einem spiralförmigen Wärmeaustauschteil.**

(57) Kondensatheizkessel mit einem Brennraum (1) und einem den Brennraum (1) umgebenden, ein Wärmeabführmedium führenden, doppelwandigen Teil (2), der in Form einer Spirale aufgewickelt ist und zwischen dessen Wärmeaustauschwänden (2', 2'') ein Rauchgaskanal (6) spiralförmig verläuft, in welchem die Rauchgase beim Durchströmen durch Wärmeabgabe an die Wärmeaustauschwände bis unter ihren Taupunkt abgekühlt werden, wobei die Wärmeaustauschwände (2', 2'') des doppelwandigen Teiles (2) Noppen (9) aufweisen, die den Rauchgaskanal (6) durchsetzen und an der gegenüberliegenden Wärmeaustauschwand des doppelwandigen Teiles (2) anliegen.

## Kondensatheizkessel mit einem spiralförmigen Wärmeaustauschteil

Die Erfindung betrifft einen Kondensatheizkessel mit einem Brennraum und einem den Brennraum umgebenden, ein Wärmeabführmedium führenden, doppelwandigen Teil, der in Form einer Spirale aufgewickelt ist und zwischen dessen Wärmeaustauschwänden ein Rauchzug spiralförmig verläuft, in welchem die Rauchgase beim Durchströmen durch Wärmeabgabe an die Wärmeaustauschwände bis unter ihren Taupunkt abgekühlt werden.

Durch die DE-OS 30 14 506 ist ein Heizkessel der genannten Art bekannt. Der bekannte Heizkessel weist einen doppelwandigen Teil auf, der in Form einer Spirale aufgewickelt ist. Im Zentrum der Spirale ist der Brennraum angeordnet, von dem aus der Rauchgaskanal spiralförmig zwischen den Spiralgängen des doppelwandigen Teiles verläuft und am Ende der Spirale in einen Abluftstutzen mündet. In dem Rauchgaskanal werden die Rauchgase im Gegenstrom zum Fluß des Wärmeabführmediums im doppelwandigen Teil geführt, wodurch ein intensiver Wärmeaustausch zwischen den Rauchgasen und dem Wärmeabführmedium erreicht wird und die Rauchgase soweit abgekühlt werden, daß sich Kondensat bildet.

Bei dem bekannten Heizkessel besteht der doppelwandige Wärmeaustauschteil aus zwei Stahlblechen, die über eine Anzahl von über ihrer Fläche verteilten Schweißpunkten miteinander verbunden sind. Die Schweißpunkte bewirken eine Verwirbelung des Wärmeabführmediums. Für den Wärmeübergang ist diese Verwirbelung ohne Bedeutung, da der Wärmeübergang von den heißen Wärmeaustauschwänden an das im doppelwandigen Teil strömende Wärmeabführmedium von Natur aus gut ist. Im Rauchgaskanal des Heizkessels fehlt dagegen die nötige Turbulenz, um einen guten Wärmeübergang zwischen den heißen Rauchgasen und den Wärmeaustauschwänden zu erreichen.

Zur Herstellung des bekannten Heizkessels werden die bereits verschweißten Bleche spiralförmig gewickelt. Damit sich die Bleche während des Biegens nicht flachdrücken, sind aufwendige Maßnahmen vorgesehen, z. B. Verfüllen des Hohlraumes zwischen den Blechen mit einem löslichen oder sublimierbarem Salz. Weiterhin ist nachteilig, daß der fertige doppelwandige Teil eine unzureichende Formstabilität aufweist und deshalb weiter stabilisiert werden muß.

Der Erfindung liegt die Aufgabe zugrunde, einen Kondensat-Heizkessel anzugeben, der kompakt aufgebaut ist und auch unter Betriebsbedingungen seine Formstabilität beibehält, und bei dem weiterhin der Wärmeübergang zwischen Rauchgasen und Wärmeabführmedium verbessert ist. Der Heizkessel soll ferner so gestaltet sein, daß eine einfache, vollautomatische Kesselfertigung möglich ist.

Diese Aufgabe wird erfindungsgemäß dadurch gelöst, daß bei dem Heizkessel die Wärmeaustauschwände des doppelwandigen Teiles Noppen aufweisen, die den Rauchgaskanal durchsetzen und an der gegenüberliegenden Wärmeaustauschwand des doppelwandigen Teiles anliegen.

Infolge dieser Bauart des Heizkessels, bei dem die Spiralgänge des doppelwandigen Teiles eng gewickelt sind und sich mit ihren Noppen gegenseitig aneinander abstützen, wird ein sehr kompakter Aufbau des doppelwandigen Teiles erreicht. Die Noppen sorgen zudem für eine optimale Verwirbelung der Rauchgase und somit für einen guten Wärmeaustausch zwischen den Rauchgasen und den Wärmeaustauschwänden des doppelwandigen Teiles.

In einer Ausführung, die eine besonders dichte Anordnung der Noppen erlaubt, sind die Noppen auf einer Wärmeaustauschwand in mindestens drei parallelen Längsreihen und auf der anderen Wärmeaustauschwand in mindestens zwei parallelen Längsreihen angeordnet, und die Noppen der letztgenannten Reihen greifen in die Zwischenräume der erstgenannten Reihen ein. Die Anzahl der Längsreihen auf den Wärmeaustauschwänden richtet sich danach, welche Bautiefe der Kessel aufweisen soll.

Eine fertigungstechnisch besonders einfache Ausbildung des doppelwandigen Teiles ist dadurch gegeben, daß die Wärmeaustauschwände aus zwei seitlich ineinander geschobenen, genoppten und spiralförmig gebogenen Blechen bestehen, deren einander überlappende, gefalzte Längsränder im Überlappungsbereich miteinander verschweißt sind. Die verwendeten Noppenbleche, die fertigungstechnisch einfach herzustellen sind, sind durch das Prägen der Noppen derart verstärkt, daß dünnste Bleche verwendet werden können. Dies wirkt sich selbstverständlich günstig auf die Wärmeübertragung im Kessel aus und führt zu einer Reduzierung der aufzuheizenden Eigenmasse des Kessels. Durch die randseitige Verschweißung der Bleche nach dem Wickeln wird die Spiralwicklung des doppelwandigen Teiles ferner in ihrer Lage sicher und formbeständig fixiert.

Aufgrund der zweiteiligen Ausbildung des doppelwandigen Wärmeaustauschteiles ist es möglich, eine Wärmeaustauschschlange zur Brauchwassererhitzung in das Wärmeaustauschteil einzubauen. Vorteilhaft ist dabei vorgesehen, daß die Wärmeaustauschschlange den gesamten, das Wärmeabführmedium führenden Raum des Wärmeaustauschteiles durchsetzt. Aufgrund ihrer Länge verfügt die Wärmeaustauschschlange über eine erhebliche Speicherkapazität, die eine Ausrüstung des Heizkessels mit einem Boiler überflüssig macht. Für die Kesselfertigung ist wichtig, daß die Wärmeaustauschschlange an der Innenseite der Wärmeaustauschwände anliegt, wodurch auf einfache Weise eine Abstandshaltung zwischen den Wänden erreicht wird.

Ein Ausführungsbeispiel der Erfindung ist in der Zeichnung dargestellt und wird im folgenden näher beschrieben. Es zeigen:

Figur 1 eine Ansicht des erfindungsgemäßen Kondensatheizkessels in teilweise geschnittener Darstellung,

Figur 2 einen angeschnittenen doppelwandigen Teil des Heizkessels der Figur 1,

Figur 3 einen Schnitt zweier aufeinanderliegender Spiralgänge des doppelwandigen Teiles sowie eine Aufsicht der verwendeten Noppenbleche,

Figur 4 einen Schnitt des Kessels in einer Ausführung als Ölheizkessel.

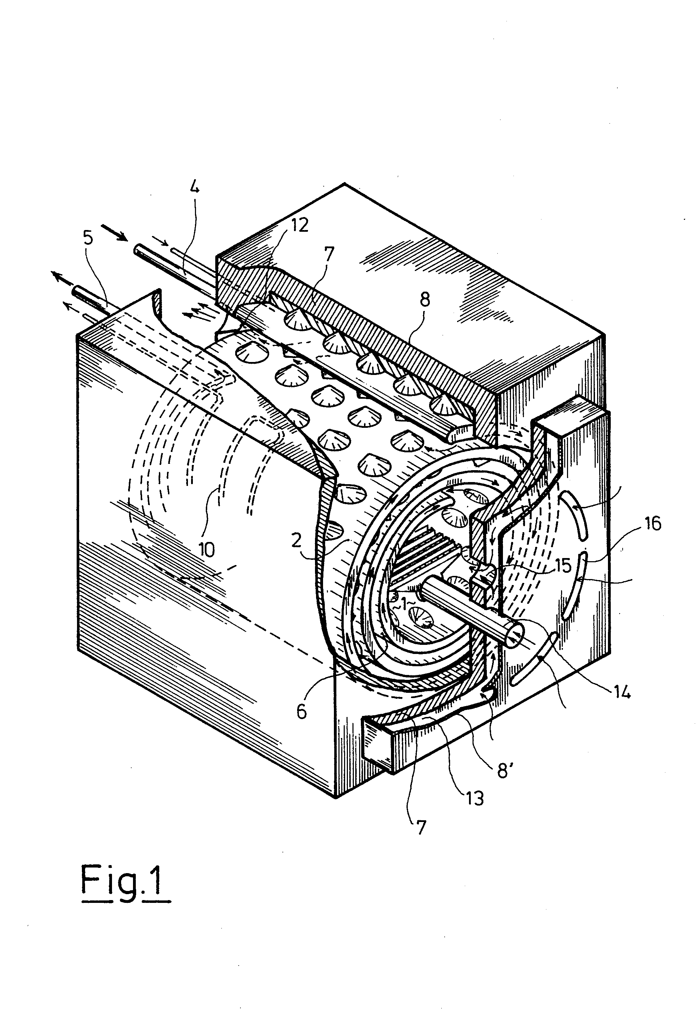

In Figur 1 ist ein erfindungsgemäßer Kondensat-Heizkessel dargestellt, bei dem ein spiralförmig gewickelter, doppelwandiger Wärmeaustauschteil 2 von einer Wärmeisolierung 7 und einer äußeren Verkleidung 8 umgeben ist.

Der doppelwandige Wärmeaustauschteil 2 bildet einen röhrenförmige Körper, in dessen Zentrum ein Brennraum 1 mit annähernd horizontaler Mittelachse angeordnet ist.

Der doppelwandige Wärmeaustauschteil 2 besitzt Spiralgänge, die annähernd nach einer logarthmischen Spirale verlaufen. In den Wärmeaustauschteil 2 tritt das Wärmeabführmedium, das z. B. Wasser sein kann, am oberen Ende des letzten Spiralganges über den Rücklauf 4 ein, und verläßt den Wärmeaustauschteil 2 aufgeheizt im oberen Zenit des Brennraumes 1 über den Vorlauf 5. Durch Noppen 9 auf den Wärmeaustauschwänden des Teiles 2 werden die Spiralgänge in Abstand gehalten und somit wird ein Rauchgaskanal 6 zwischen den Spiralgängen gebildet. Von dem Brennraum 1 aus verläuft der Rauchgaskanal 6 spiralförmig zwischen den Gängen des doppelwandigen Teiles 2 und tritt am oberen Ende tangential in einen Rauchgassammelkanal 12 ein. Von dort werden die Rauchgase über einen Abgasventilator (nicht dargestellt) abgezogen. Ersichtlicherweise werden in dem erfindungsgemäßen Heizkessel Rauchgase und Wärmeabführmedium im Gegenstrom geführt, wodurch ein intensiver Wärmeaustausch erreicht wird.

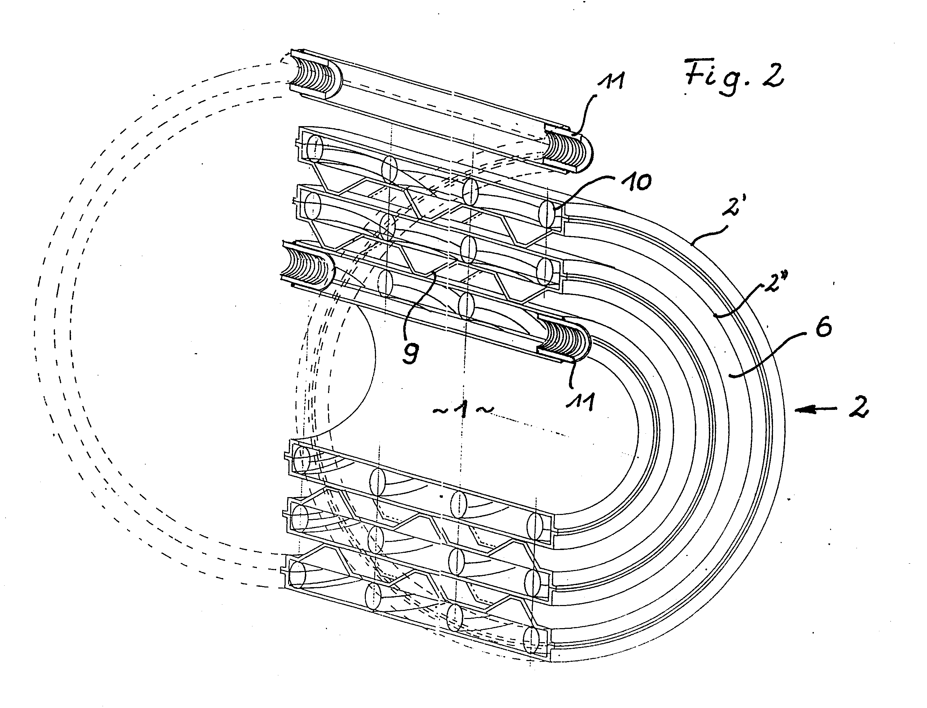

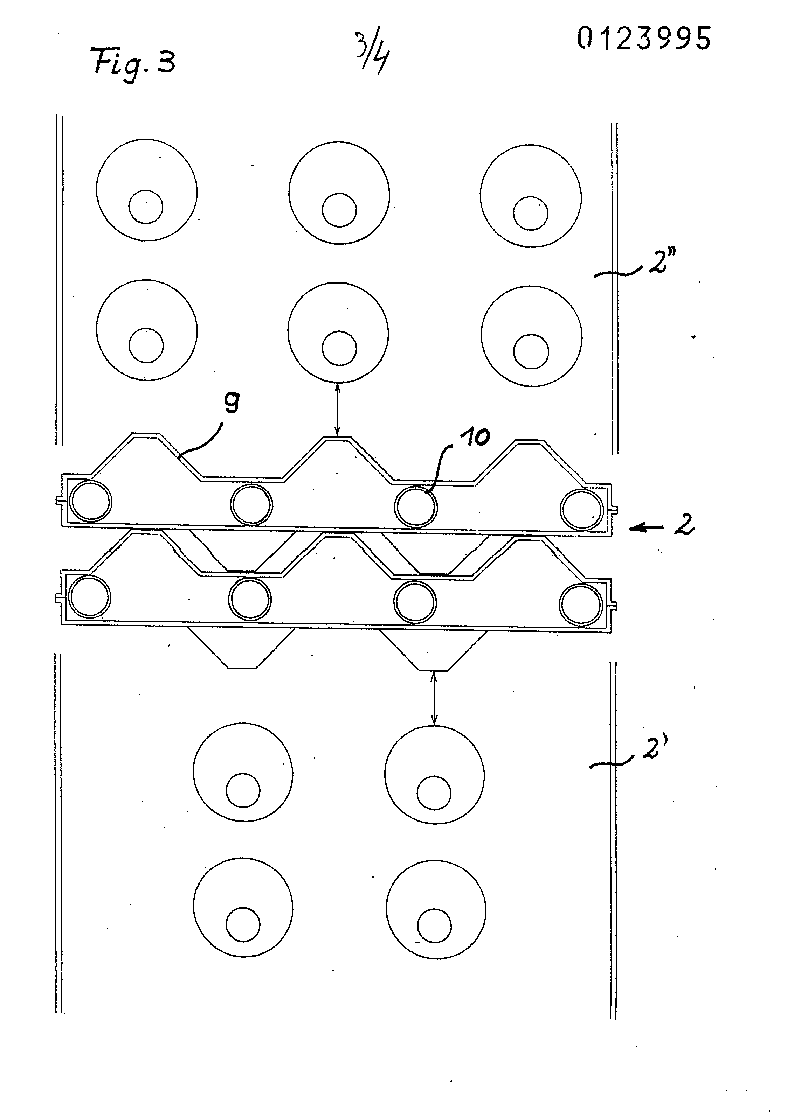

Wie insbesondere aus den Figuren 2 und 3 ersichtlich ist, ist der doppelwandige Wärmeaustauschteil 2 des Heizkessels aus Blechen 2' und 2" aufgebaut, die randseitig doppelt gegeneinander gefalzt und an der Falznaht miteinander verschweißt sind. In die Bleche 2' und 2" sind die Noppen 9 eingeprägt.

Wie Figur 3 zeigt, sind auf den Blechen 2' und 2" parallel zu den Längsrändern und in gleichen Abständen voneinander Reihen von Noppen 9 angeordnet, und zwar auf dem Blech 2' zwei Noppenreihen und auf dem Blech 2" drei Noppenreihen. Die Noppen 9 sind kegelförmig ausgebildet und an ihrer Spitze abgeflacht. Bei einem fertig gewickelten doppelwandigen Teil 2 greifen die Noppen 9 der Zweier-Reihen in die Zwischenräume der Dreier-Noppenreihen ein und liegen mit ihrer abgeflachten Kegelstumpffläche an der Wärmeaustauschwand des Bleches 2" an.

Durch die Noppen 9 wird die Wärmeaustauschfläche der Bleche 2' und 2" erheblich vergrößert. Die Noppen 9, die den Rauchgaskanal 6 in dichter Anordnung durchsetzen, sorgen ferner für eine starke Verwirbelung der Rauchgase, die auf dem Weg durch den doppelwandigen Teil 2 einen Großteil ihrer Wärmeenergie abgeben. Die Noppen 9 dienen ferner als Stabilisatoren der Spiralform des doppelwandigen Teiles 2, so daß zusätzliche Streben oder Anker zwischen den Spiralgängen entfallen können.

Wie in den Figuren 2 und 3 ferner gezeigt ist, ist in den Wärmeaustauschteil 2 des Heizkessels eine Wärmeaustauschschlange 10 eingelegt, die zur Brauchwasseraufheizung dient. Die Wärmeaustauschschlange 10 liegt an den Wärmeaustauschwänden 2' und 2" an und hält diese somit auf Abstand. Die Wärmeaustauschschlange 10, die aus einem Stück besteht, wird zunächst so gebogen, daß mehrere mäanderförmige Lagen nebeneinanderliegen. Anschließend wird die Wärmeaustauschschlange 10 insgesamt noch einmal spiralförmig gebogen. Bei der Kesselfertigung wird die fertig gebogene Wärmeaustauschschlange 10 zwischen die Bleche 2' und 2" eingelegt, bevor die beiden Bleche ineinandergeschoben werden.

Durch den intensiven Wärmeaustausch zwischen den Rauchgasen und dem Wärmeabführmedium werden die Rauchgase im Heizkessel bis unter ihren Taupunkt abgekühlt, und es bildet sich ein saures Kondensat im Rauchgaskanal 6. Um das Kondensat ablassen zu können, ist jeweils am tiefsten Punkt jedes Spiralganges ein Kondensatablaß (nicht gezeigt) vorgesehen. Der Kondensatablaß ist mit einem Kondensat-Auffangbehälter verbunden, in dem das Kondensat gesammelt und neutralisiert werden kann.

Um eine Korrosion des Kessels durch das Kondensat sicher auszuschließen, sind der doppelwandige Teil 2 und die Teile, die mit dem Kondensat in Berührung kommen, aus V4A-Edelstahl oder aus Aluminium gefertigt. In der Ausführung in Aluminium wird der Wärmeaustauschteil 2 durch Spritz- oder Druckgießen hergestellt. Eine Herstellung im Strangpreßverfahren ist ebenfalls möglich.

Mit dem in Figur 2 dargestellten doppelwandigen Wärmeaustauschteil 2 ist ein Heizkessel in einer Grundausführung ausgerüstet. Ohne daß eine Neukonstruktion des Kessels nun erforderlich ist, kann die Kesselleistung dadurch erhöht werden, daß mehrere Wärmeaustauschteile 2 modulartig hintereinander angeordnet sind. Die einzelnen Wärmeaustauschteile 2 sind dabei über als Muffen ausgebildete Verbindungsstücke 11 am Vorlauf und Rücklauf miteinander verbunden. Es ist dann nur noch erforderlich, den Brenner dem verlängerten Brennraum 1 anzupassen. Der Heizkessel erlaubt demzufolge einen Ausbau nach Art eines Baukastensystems, das einer Auslegung auf den individuellen Wärmebedarf auf einfache und kostengünstige Weise ermöglicht.

Wie bereits oben erwähnt, ist der Heizkessel von einer Wärmeisolierung 7 umgeben. Auf ihrer Außenseite weist die Wärmeisolierung 7 vorteilhaft eine verlorene Schalung oder Verkleidung 8 aus dünnwandigem Blech auf, an dem das Material der Wärmeisolierung 7, das vorzugsweise aus nicht brennbarem Phenolharzschaum besteht, haftet. Bei der Kesselherstellung bringt die verlorene Schalung 8 den Vorteil, daß der Raum zwischen dem Wärmeaustauschteil 2 und der verlorenen Schalung 8 ausgeschäumt werden kann, ohne daß Formteile benutzt zu werden brauchen. In der Schalung 8 und der Wärmeisolierung 7 werden ferner die Anschlußleitungen des Kessels sicher eingebunden.

Wie Figur 1 zeigt, ist zur Kühlung der Wärmeisolierung 7 und gleichzeitiger Vorwärmung der Verbrennungsluft auf der Frontseite des Kessels zwischen der Wärmeisolierung 7 und einer Kesselverkleidung 8' eine luftführende Kammer 13 gebildet. Durch die Verkleidung 8' und die Wärmeisolierung 7 ist eine Gaszuführleitung 14 für den Gasbrenner des Kessels geführt. Oberhalb der Durchtrittsöffnung für die Gaszuführleitung 14 weist die Wärmeisolierung 7 ferner eine Öffnung 15 auf, die die Verbindung der Kammer 13 mit dem Brennraum 1 herstellt. Weiterhin sind in der Verkleidung 8' kreisförmig um die Mitte der plattenförmigen Verkleidung Luftzutrittsöffnungen 16 angeordnet, durch die die Außenluft in die Kammer 13 eintreten kann. Die Luftzutrittsöffnungen 16 bestehen aus länglichen Schlitzöffnungen, die in regelmäßigen Abständen angeordnet sind.

Luft, die vom Ventilator des Kessels durch die Luftzutrittsöffnungen 16 in die Kammer 13 angesaugt wird, streicht auf dem Weg zur Öffnung 15 an der aufgeheizten Frontfläche der Wärmeisolierung 7 entlang, wobei die Luft vorgewärmt wird und anschließend vorgewärmt durch die Öffnung 15 in den Brennraum 1 eintritt. Durch die Luftkühlung lassen sich Wärmeverluste auf der Frontseite des Kessels vermeiden. Weiterhin wird durch die Zufuhr bereits vorgewärmter Verbrennungsluft in den Brennraum die Gasverbrennung so weit verbessert, daß nur noch geringe Kohlenmonoxyd-Gehalte in den Rauchgasen auftreten.

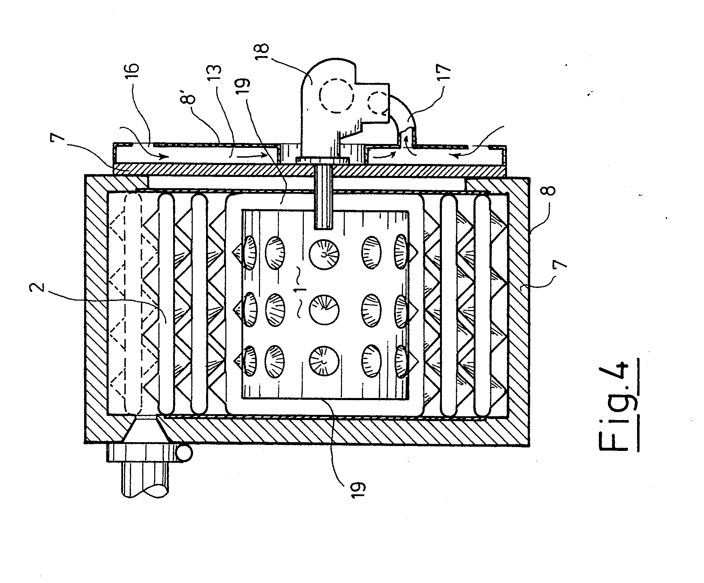

In einer weiteren Ausgestaltung kann der Kessel gemäß Figur 4 auch als Ölheizkessel ausgeführt sein. In dieser Ausführung sind auf der Vorder- und Rückseite des Brennraumes 1 doppelwandige Kühlflächen 19 angeordnet, die von dem Wärmeabführmedium durchflossen werden. Die Kühlflächen 19 schützen die Kesselwände auf der Vorder- und Rückseite vor der direkten Einwirkung der Ölbrennerflamme. Vorteilhaft sind die Kühlflächen 19 direkt an den Wärmeaustauschteil 2 angesetzt und bilden somit einen Teil des Wärmeaustauschteiles 2. Auf der Frontseite des Heizkessels ist nun ein Ölbrenner 18 angeordnet, der mit seinem Brennerstutzen durch die Wärmeisolierung der Verkleidung 8' und die Kühlfläche 19 geführt ist. Dem Ölbrenner 18 wird die für die Zerstäubung und Verbrennung des Öls benötigte Verbrennungsluft vorgewärmt zugeführt. Die Luftansaugung des Brenners 18 ist dazu über eine Verbindungsleitung 17 mit der Vorwärmkammer 13 auf der Frontseite des Kessels verbunden.

Zur Vermeidung von Korrosion im Heizkessel ist außer der Materialauswahl für den Wärmeaustauschteil als zusätzliche Maßnahme vorgesehen, den Wärmeaustauschteil auf der Rauchgasseite zumindest teilweise mit einer hitzebeständigen und säurefesten Beschichtung zu versehen. Eine Beschichtung ist insbesondere an dem durch Spaltkorrosion gefährdeten Spitzen der Noppen 9 vorgesehen, wobei als Beschichtungsmaterial vorzugsweise Epoxidharz eingesetzt wird.

Patentansprüche:

1. Kondensatheizkessel mit einem Brennraum und einem den Brennraum umgebenden, ein Wärmeabführmedium führenden, doppelwandigen Teil, der in Form einer Spirale aufgewickelt ist und zwischen dessen Wärmeaustauschwänden ein Rauchgaskanal spiralförmig verläuft, in welchem die Rauchgase beim Durchströmen durch Wärmeabgabe an die Wärmeaustauschwände bis unter ihren Taupunkt abgekühlt werden, dadurch gekennzeichnet, daß die Wärmeaustauschwände (2', 2") des doppelwandigen Teiles (2) Noppen (9) aufweisen, die den Rauchgaskanal (6) durchsetzen und an der gegenüberliegenden Wärmeaustauschwand des doppelwandigen Teiles anliegen.

2. Heizkessel nach Anspruch 1, dadurch gekennzeichnet, daß die Noppen (9) auf einer Wärmeaustauschwand (2") in mindestens drei parallelen Längsreihen und auf der anderen Wärmeaustauschwand (2') in mindestens zwei parallelen Längsreihen angeordnet sind, und die Noppen (9) der letztgenannten Reihen in die Zwischenräume des erstgenannten Reihen eingreifen.

3. Heizkessel nach Anspruch 1, dadurch gekennzeichnet, daß die Wärmeaustauschwände des doppelwandigen Teiles (2) aus zwei ineinandergeschobenen, genoppten und spiralförmig gebogenen Blechen (2', 2") bestehen, deren einander überlappende, gefalzte Längsränder im Überlappungsbereich miteinander verschweißt sind.

4. Heizkessel nach Anspruch 1, mit einer Wärmeaustauschschlange zur Brauchwassererhitzung, dadurch gekennzeichnet, daß die Wärmeaustauschschlange (10) im Inneren des doppelwandigen Teiles (2) angeordnet ist.

5. Heizkessel nach Anspruch 4, dadurch gekennzeichnet, daß die Wärmeaustauschschlange (10) den gesamten, das Wärmeabführmedium führenden Raum des doppelwandigen Teiles (2) durchsetzt.

6. Heizkessel nach Anspruch 4, dadurch gekennzeichnet, daß die Wärmeaustauschschlange (10) einteilig ausgebildet ist und nebeneinanderliegende, spiralförmig gebogene Lagen bildet.

7. Heizkessel nach Anspruch 4, dadurch gekennzeichnet, daß die Wärmeaustauschschlange (10) an der Innenseite der Wärmeaustauschwände (2', 2") des doppelwandigen Teiles anliegt.

8. Heizkessel nach Anspruch 1, mit mindestens einem doppelwandigen Teil, der einen Vor- und Rücklauf für das Wärmeabführmedium aufweist, dadurch gekennzeichnet, daß mehrere doppelwandige Teile (2) modulartig hintereinander angeordnet und durch Verbindungsstücke (11) am Vor- und Rücklauf (4, 5) untereinander verbunden sind.

9. Heizkessel nach Anspruch 1, dadurch gekennzeichnet, daß der doppelwandige Teil (2) einen Isolationsmantel (7) aus Harzschaum aufweist, welcher von einer Verkleidung oder verlorenen Schalung (8) umgeben ist, an der der Harzschaum haftet.

10. Heizkessel nach Anspruch 9, dadurch gekennzeichnet, daß der Harzschaum aus Phenolharz besteht.

11. Heizkessel nach Anspruch 1, mit einer Verkleidung auf der Frontseite des Kessels, die eine Durchtrittsöffnung für einen Brenner sowie einen Luftzutritt in den Brennraum aufweist, dadurch gekennzeichnet, daß die Verkleidung (7, 8') auf ihrer Außenseite eine luft-

0123995

durchströmte Kammer (13) bildet, von der aus an der Kammerperipherie in die Kammer (13) eintretende Luft etwa im Zentrum der Verkleidung dem Brennraum (1) zugeführt wird.

12. Heizkessel nach Anspruch 11, dadurch gekennzeichnet, daß die frontseitige Kammerwandung (8') kreisförmig um die Verkleidungsmitte angeordnete Luftzutrittsöffnungen (16) aufweist.

13. Heizkessel nach Anspruch 1, dadurch gekennzeichnet, daß der doppelwandige Teil (2) aus V4A-Edelstahl besteht.

14. Heizkessel nach Anspruch 1, dadurch gekennzeichnet, daß der doppelwandige Teil (2) aus Aluminium besteht.

15. Heizkessel nach Anspruch 11, mit einem Ölbrenner zur Verwendung als Ölheizkessel, dadurch gekennzeichnet, daß die Vorwärmkammer (13) mit einer Luftansaugung des Ölbrenners (18) verbunden ist, und daß auf der Vorder- und Rückseite des Brennraumes (1) doppelwandige Kühlflächen (13) angeordnet sind.

16. Heizkessel nach Anspruch 15, dadurch gekennzeichnet, daß die Kühlflächen (19) Teile des doppelwandigen Wärmeaustauschteiles (2) bilden.

17. Heizkessel nach Anspruch 1, dadurch gekennzeichnet, daß der doppelwandige Teil (2) auf der Rauchgasseite zumindest teilweise eine hitzebeständige und säurefeste Beschichtung aufweist.

18. Heizkessel nach Anspruch 17, dadurch gekennzeichnet, daß die Spitzen der Noppen (9) mit Epoxidharz be- schichtet sind.

Fig.1

0123995

Fig. 2

**Fig. 3**

**Fig.4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A,D | DE-A-3 014 506 (CHAFFOTEAUX & MAURY) <br> * Insgesamt * | 1 | F 24 H 1/28 <br> F 24 H 3/06 |
| A | FR-A-1 088 691 (JET HEET) <br> * Insgesamt * | 1 | |
| A | US-A-2 488 549 (McCRACKEN) <br> * Insgesamt * | 1 | |
| A | BE-A- 520 000 (JET-HEET) <br> * Insgesamt * | 1 | |
| A | FR-A-2 464 437 (NEFIT) <br> * Figuren * | 11 | |

RECHERCHIERTE SACHGEBIETE (Int. Cl. ³)

F 24 H

Der vorliegende Recherchenbericht wurde für alle Patentansprüche erstellt.

| Recherchenort <br> DEN HAAG | Abschlußdatum der Recherche <br> 05-07-1984 | Prüfer <br> VAN GESTEL H.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82